# EUROPÄISCHE PATENTANMELDUNG

(11) **EP 4 826 577 A1**
(43) Veröffentlichungstag der Anmeldung: **21.10.2026**
(21) Anmeldenummer: 25207300.2
(22) Anmeldetag: 07.10.2025
(51) Int. Cl.: G06F 21/12, G06F 21/14

(54) **VORRICHTUNG UND VERFAHREN ZUM SCHUTZ VOR NICHT AUTORISIERTER GEZIELTER BEEINFLUSSUNG EINES PROGRAMMS**

(30) Priorität: 15.04.2025 EP 25170718; 15.04.2025 EP 25170719; 15.04.2025 EP 25170720
(71) Anmelder: Wibu-Systems AG, 76137 Karlsruhe (DE)
(72) Erfinder: Engelmann, Axel, 76137 Karlsruhe (DE); Heumann, Maurice, 76137 Karlsruhe (DE)
(74) Vertreter: Durm Patentanwälte PartG mbB

(57) **Zusammenfassung**

Ein Verfahren zum Schutz vor nicht autorisierter gezielter Beeinflussung eines Programms, wobei das Programm eine Funktion (50) mit wenigstens zwei Funktionsmodulen (40) hat, wobei wenigstens zwei Teilbäume (42) zwischen Funktionsmodulen (40) ausgebildet sind, umfasst folgende Schritte: Auswählen von wenigstens zwei Teilbäumen (42) des Programms; Zusammenfügen der Teilbäume (42) mit den Funktionsmodulen (40) zu einer Hyperfunktion (60); Bilden wenigstens eines Linkmoduls (44), das dazu ausgebildet ist, einen Eingang wahlweise mit Ausgängen zu verknüpfen; Einfügen des Linkmoduls (44) in die Funktionsstruktur derart, dass das Linkmodul (44) in einen Teilbaum (42) der Funktionsstruktur zwischen mindestens zwei Funktionsmodulen (40) eingefügt wird; und Bilden eines semantisch falschen Strukturpfads mit dem Linkmodul (44) zwischen zwei Funktionsmodulen (40) derart, dass zwei Funktionsmodule (40) funktional miteinander verknüpft werden.

## Beschreibung

Die vorliegende Erfindung betrifft ein Verfahren, eine Funktionsstruktur und eine Vorrichtung zum Schutz von Computerprogrammen vor nicht autorisierter Beeinflussung und Analyse. Insbesondere wird eine Methode zur Obfuskation von Programmcode vorgestellt, die die Komplexität des Programms erhöht und gleichzeitig die ursprüngliche Funktionalität beibehält. Die Erfindung zielt darauf ab, die Sicherheit von Programmen zu verbessern, indem sie es potenziellen Angreifern erschwert, den Programmablauf zu verstehen und zu manipulieren.

Im Stand der Technik sind einige Vorgehensweisen bekannt, um Programme gegen eine nicht autorisierte Beeinflussung und Manipulation durch Dritte zu schützen. Dabei ist auch der Schutz vor einer Analyse des Programmcodes wichtig, um auch bei einem Reverse Engineering ein Verstehen des Ablaufs zu vermeiden. Wenn Software ohne entsprechende Schutzmaßnahmen leicht analysiert werden kann, besteht das Risiko, dass Konkurrenten oder unbefugte Dritte Zugriff auf den Quellcode erhalten und diesen für ihre eigenen Zwecke nutzen oder sogar verändern können.

Bekannt ist eine Technik, die mit "Function Merge" beschrieben wird und mit der effizient die Komplexität erhöht werden kann. Allerdings bestehen dort zwei Einschränkungen. Zunächst dient ein Selektor lediglich dazu die Teilfunktionen innerhalb der Merge-Funktion anzuspringen. Die Komplexität der Teilfunktionen, welche ursprünglich eigenständig waren, wird nicht geändert und diese sind damit einfach analysierbar. In einer Variante des "MergeFlatten" hingegen wird vor dem Zusammenführen einzelner Teilblöcke deren Verbindung aufgelöst, indem der Kontrollfluss über aufwendige Dispatcher koordiniert wird. Damit wird zwar die Komplexität deutlich erhöht, allerdings sinkt die Performance durch die eingefügte Zustandsmaschine stark. Die Transformation gleicht einer Überführung des Codes in eine virtuelle Maschine mit komplexen Instruktionssatz und ist deshalb systembedingt mit nicht vernachlässigbaren Performanceeinbußen verbunden.

Bekannte Techniken zur Programmobfuskation, wie in der Patentanmeldung US 2005/0210275 A1 beschrieben, umfassen das einfache Einfügen von Dummy-Code oder Verschleiern von Kontrollflüssen. Diese Methoden können jedoch oft durch fortgeschrittene Analysetechniken umgangen werden.

Die Patentanmeldung US 2014/0040873 A1 offenbart eine Methode zur Obfuska-tion durch Transformation von Programmcode in eine virtuelle Maschine mit komplexem Befehlssatz. Dies führt jedoch zu starken, nicht akzeptablen Performanceeinbußen.

In der Patentanmeldung EP 3 506 112 A1 wird eine Technik zur Verschleierung von Programmstrukturen durch Einfügen von Zwischenschichten vorgestellt. Diese Methode erhöht zwar die Komplexität, kann aber den tatsächlichen Programmablauf nicht verbergen und bietet nur einen geringen Schutz.

Die Aufgabe der vorliegenden Erfindung liegt darin, ein verbessertes Verfahren zur Programmobfuskation zu entwickeln, das die Komplexität des Programms signifikant erhöht, ohne dabei die Funktionalität oder Performance wesentlich zu beeinträchtigen.

Gelöst wird die vorliegende Aufgabe durch ein Verfahren mit den Merkmalen des Anspruchs 1, durch eine Funktionsstruktur mit den Merkmalen des Anspruchs 11 und durch eine Vorrichtung mit den Merkmalen des Anspruchs 13.

Das Verfahren fasst mehrere Funktionen zu einer Hyperfunktion zusammen und fügt dabei Linkmodule zwischen Funktionsmodulen ein. Diese Linkmodule ermöglichen die Bildung semantisch falscher Strukturpfade, die den tatsächlichen Programmablauf verschleiern. Eine entsprechende Funktionsstruktur und eine Vorrichtung zur Erstellung des obfuskierten Programmcodes werden ebenfalls bereitgestellt. Durch die Einführung dieser komplexen Struktur und die Verwendung von Selektions- und Steuerungsmechanismen wird eine effektive Obfuskation erreicht, die gleichzeitig die ursprüngliche Programmfunktionalität bewahrt und insbesondere den tatsächlichen Kontrollfluss des Programms vor unbefugter Analyse schützt.

Gemäß einem ersten Aspekt betrifft die vorliegende Erfindung ein automatisches Verfahren zum Schutz vor nicht autorisierter gezielter Beeinflussung eines Programms, bevorzugt mit Maßnahmen zum Unterbinden eines Auslesens von Instruktionen und Kontrollflüssen des geschützten Programms zur Laufzeit aus einem Arbeitsspeicher eines Prozessors. Das Verfahren umfasst das Auswählen von wenigstens zwei Teilbäumen des Programms, das Zusammenfügen der ausgewählten Teilbäume mit den Funktionsmodulen zu einer Hyperfunktion mit einer die Funktionsmodule verbindenden Funktionsstruktur, das Bilden wenigstens eines Linkmoduls mit wenigstens einem Eingang zum Verbinden mit einem Funktionsmodul und wenigstens zwei Ausgängen zum Verbinden mit je einem Funktionsmodul, das Einfügen des wenigstens einen Linkmoduls in die Funktionsstruktur und das Bilden eines semantisch falschen Strukturpfads mit dem Linkmodul zwischen zwei Funktionsmodulen. Dabei werden zwei Funktionsmodule funktional miteinander verknüpft, beispielsweise zwei Funktionsmodule von zwei unterschiedlichen Funktionen.

Dieses automatische oder automatisierte Verfahren bietet den Vorteil, dass es die Komplexität des Programms erhöht und somit die Analyse durch unbefugte Dritte erschwert, ohne dabei die ursprüngliche Funktionalität zu beeinträchtigen. Die Einführung von Linkmodulen und semantisch falschen Strukturpfaden macht es für Angreifer schwieriger - und bei Verwendung mehrerer Linkmodule erheblich schwieriger - den tatsächlichen Kontrollfluss des Programms zu verstehen und zu manipulieren. Zudem ermöglicht die Bildung einer Hyperfunktion eine effiziente Verschmelzung mehrerer Funktionen, was die Analyse des Programms weiter erschwert. Die Linkmodule können mittels Parameter bei der Übergabe an die Hyperfunktion angesteuert werden. Bevorzugt kann ein Selektionsmodul zur Ansteuerung eingesetzt werden.

Gemäß einem zweiten Aspekt betrifft die Erfindung eine Funktionsstruktur einer Hyperfunktion eines Programms. Diese Funktionsstruktur umfasst wenigstens drei Funktionsmodule, wenigstens eine Funktion mit zwei Funktionsmodulen, wenigstens zwei Teilbäume zwischen Funktionsmodulen und ein Linkmodul mit wenigstens einem Eingang zum Verbinden mit einem Funktionsmodul und wenigstens zwei Ausgängen zum Verbinden mit je einem Funktionsmodul. In der Funktionsstruktur sind die Funktionsmodule und das Linkmodul derart angeordnet, dass das Linkmodul in einen Teilbaum der Funktionsstruktur zwischen zwei Funktionsmodulen angeordnet ist und ein semantisch falscher Strukturpfad mit dem Linkmodul zwischen zwei Funktionsmodulen, die funktional miteinander verknüpft sind, gebildet ist.

Der Vorteil dieser Funktionsstruktur liegt in ihrer komplexen Anordnung, die es potenziellen Angreifern erschwert, die tatsächlichen funktionalen Zusammenhänge zu erkennen. Die Einführung von semantisch falschen Strukturpfaden erhöht die Verschleierung und macht es unmöglich, den korrekten Programmablauf zu rekonstruieren.

Gemäß einem dritten Aspekt wird eine Vorrichtung zum Erstellen eines obfuskierten Programmcodes einer Funktion eines Programms zum Schutz vor nicht autorisierter Beeinflussung des Programms bereitgestellt. Diese Vorrichtung umfasst eine Auswahleinheit zum Auswählen von Teilbäumen, eine Mergeeinheit zum Zusammenfügen der Teilbäume zu einer Hyperfunktion, einen Modulgenerator zum Bilden von Linkmodulen, und eine Umwandlungseinheit zum Einfügen der Linkmodule in die Funktionsstruktur und zum Bilden wenigstens eines semantisch falschen Strukturpfads.

Diese Vorrichtung bietet den Vorteil, dass sie eine automatisierte und effiziente Erstellung von obfuskiertem Programmcode ermöglicht. Durch die verschiedenen Einheiten kann der Prozess der Programmverschleierung systematisch und konsistent durchgeführt werden, was zu einem höheren Schutzgrad führt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung und das System in den abhängigen Ansprüchen beschriebenen Ausgestaltungen ausgeführt sein sowie vice versa.

In einer bevorzugten Ausgestaltung der Erfindung umfasst das bevorzugt automatische Verfahren das Einfügen eines Selektionsmoduls zum Verknüpfen und zum Auswählen der Funktionen. Das Verfahren umfasst weiter das Einfügen eines Ausgangsmoduls zum Zusammenführen von Ergebnissen der Funktionen sowie zum Ausgeben wenigstens eines Ergebnisses und ermöglicht so eine flexible Steuerung des Programmablaufs. Dies bietet den Vorteil, dass die Ausführung dynamisch angepasst werden kann, was die Vorhersagbarkeit des Programms für Angreifer weiter reduziert. Das Selektionsmodul kann die Funktionen und/oder Funktionsmodule ansteuern und auswählen und so den korrekten Pfad durch die Funktionsstruktur bestimmen und dynamisch festlegen. Bevorzugt kann das Selektionsmodul die Linkmodule der Funktionsstruktur der Hyperfunktion ansteuern, um einzelne Pfade zu realisieren. Das Selektionsmodul wird vorzugsweise mit Selektionsparametern versorgt, die für die Ansteuerung dienen.

Eine bevorzugte Ausgestaltung des Verfahrens sieht das Einfügen eines oder mehrerer ungültiger Funktionsmodule in die Funktionsstruktur der Hyperfunktion vor, wodurch die Verschleierung und die Verwirrung für potenzielle Angreifer erhöht wird. Es sind somit Verzweigungen in nicht existente Funktionsvarianten möglich, die bevorzugt unsinnige oder falsche Ergebnisse hervorrufen. Der Vorteil liegt hier in der Schaffung von "Rauschen", das die Analyse des Programms erschwert und zusätzliche Ressourcen von Angreifern bindet.

Vorzugsweise entstammen wenigstens zwei der Funktionsmodule unterschiedlichen Funktionen. Durch das Zwischenschalten von Linkmodulen können somit Teilbäume und Strukturpfade gebildet werden, die unterschiedliche Funktionen miteinander verbinden, was im ursprünglichen Programm nicht vorgesehen ist. So entstehen bevorzugt semantisch falsche Strukturpfade und Verknüpfungen. Die Verwendung von Funktionsmodulen aus unterschiedlichen Funktionen erhöht die Komplexität der Hyperfunktion stark. Dies hat den Vorteil, dass die ursprünglichen funktionalen Zusammenhänge noch schwerer zu erkennen sind.

In einer bevorzugten Ausführungsform des Verfahrens werden weitere Schritte durchgeführt, die auch das Aufrufen der Hyperfunktion, das Übergeben von Eingabeparametern von dem Programm an die Hyperfunktion sowie das Empfangen eines Ergebnisses der Hyperfunktion umfassen. Die Eingabeparameter umfassen Parameter zum Aufruf der Funktionen der Hyperfunktion und wenigstens einen Linkparameter zur Ansteuerung des wenigstens einen Linkmoduls er Hyperfunktion. Die Übergabe von Eingabeparametern, einschließlich eines Linkparameters zur Ansteuerung des Linkmoduls, ermöglicht eine präzise Steuerung der Hyperfunktion zur Laufzeit. Der Vorteil liegt in der Möglichkeit, das Verhalten des Programms dynamisch zu ändern, ohne die Struktur zu modifizieren.

In einer bevorzugten Ausgestaltung der Erfindung umfasst das Verfahren den weiteren Schritt des Übergebens eines Selektionsparameters an die Hyperfunktion zur Auswahl einer der Funktionen der Hyperfunktion. Der der Selektionsparameter ist bevorzugt eine globale Variable oder eine lokale Variable einer Funktion oder basiert bevorzugt auf einer lokalen Analyse von Zuständen des Programms. Die Verwendung eines Selektionsparameters zur Auswahl einer der Funktionen der Hyperfunktion bietet den Vorteil einer flexiblen Ausführungssteuerung. Dies kann auf Basis von globalen oder lokalen Variablen oder einer lokalen Analyse von Programmzuständen erfolgen, was die Anpassungsfähigkeit des Programms erhöht.

Vorzugsweise umfassen die Eingabeparameter Informationen zur Festlegung eines Strukturpfads durch die Funktionsstruktur. Diese Integration von Informationen zur Festlegung eines Strukturpfads in die Eingabeparameter ermöglicht eine noch feinere Kontrolle über den Programmablauf. Dies bietet den Vorteil, dass der tatsächliche Ausführungspfad für Außenstehende praktisch nicht vorherzusagen ist.

In einer bevorzugten Ausführung umfasst das Verfahren den weiteren Schritt des Empfangens eines Kontrollparameters und/oder des wenigstens einen Linkparameters, wobei die Parameter bevorzugt in das Ergebnis der Hyperfunktion integriert sind. Ein weiterer optionaler Schritt richtet sich auf das Bewerten des Ergebnisses basierend auf dem Linkparameter oder einem Bewertungsparameter, der Informationen zum Strukturpfad umfasst.

Bevorzugt wird ein Parametersatz als Eingabeparameter zum Aufruf der Hyperfunktion verwendet, der alle Parameter der Funktionen der Hyperfunktion umfasst. Die Verwendung eines derartigen Parametersatzes vereinfacht die Handhabung der Hyperfunktion.

Eine bevorzugte Ausführungsform des Verfahrens weist das Auswerten des Programmcodes der Hyperfunktion auf, um eine Metrik für den Grad einer Obfuskation der Hyperfunktion zu erhalten, und das Anwenden und Implementieren weiterer Obfuskationsmethoden auf den Programmcode der Hyperfunktion, wenn die Metrik unter einem vordefinierten Schwellwert liegt, die Verschleierung also einen gewünschten Grad noch nicht erreicht hat. Die Auswertung des Programmcodes der Hyperfunktion zur Bestimmung einer Metrik für den Grad der Obfuskation und die Anwendung weiterer Obfuskationsmethoden bei Bedarf ermöglichen eine kontinuierliche Verbesserung des Schutzes. Eine adaptive Sicherheit, die sich an veränderte Bedrohungsszenarien anpassen kann, lässt sich auf diese Weise einfach und robust implementieren.

In einer bevorzugten Ausgestaltung der Funktionsstruktur wird diese in einer Ausführungsumgebung implementiert oder ausgeführt. Bevorzugt ist in der Ausführungsumgebung eine Auswahlfunktion zur Festlegung der Parameter zum Aufruf der Hyperfunktion implementiert oder ausführbar. Die Ausführungsumgebung ist bevorzugt eine sichere Umgebung. Sie kann als ein Vertrauensanker, ein Secure-Element oder in einem Speicher mit Prozessor, einem Remote-Speicher oder einem Netzwerkspeicher realisiert sein. Die Implementierung der Funktionsstruktur in einer sicheren Ausführungsumgebung, wie einem Vertrauensanker oder in der Cloud, bietet zusätzlichen Schutz. Der Vorteil liegt hier in der Schaffung einer isolierten und kontrollierten Umgebung für die Ausführung des geschützten Codes.

Eine Auswahlfunktion kann bevorzugt verwendet werden,um die Parameter für die Hyperfunktion zu erzeugen. Diese werden vorzugsweise zur Selektion des relevanten Teilbaumes innerhalb der Hyperfunktion genutzt, sowie für die Konfiguration der Linkmodule zwischen den Teilbäumen. Die Reihenfolge der Parameter (Eingangsparameter) einschließlich der Linkparameter und Selektionsparameter kann bevorzugt dynamisch während des Kompilierens erfolgen, variiert und/oder geändert werden.

Die Ausführungsumgebung kann bevorzugt in der Vorrichtung umfasst oder mit der Vorrichtung verbunden sein, wobei in der Ausführungsumgebung die Funktionsstruktur oder bevorzugt eine Auswahlfunktion zur Festlegung der Parameter zum Aufruf der Hyperfunktion implementiert oder ausführbar ist. Die Ausführungsumgebung kann wie oben beschrieben ausgebildet sein.

Im Folgenden wird ein Ausführungsbeispiel der Erfindung unter Bezugnahme auf die beigefügten Abbildungen beschrieben. Es zeigen:
- Figur 1: eine schematische Darstellung der erfindungsgemäßen Vorrichtung;
- Figur 2: zwei Funktionen mit je zwei Funktionsmodulen und je einem Teilbaum;
- Figur 3: die Struktur aus Figur 2 mit einem Linkmodul;
- Figur 4: drei Funktionen eines Programms mit verknüpften Funktionsmodulen;
- Figur 5: eine Funktionsstruktur einer Hyperfunktion mit den drei Funktionen aus Figur 4 und mit einem Selektionsmodul und Ausgangsmodul; und
- Figur 6: die Funktionsstruktur aus Figur 5 mit zusätzlichen Linkmodulen und Teilbäumen.

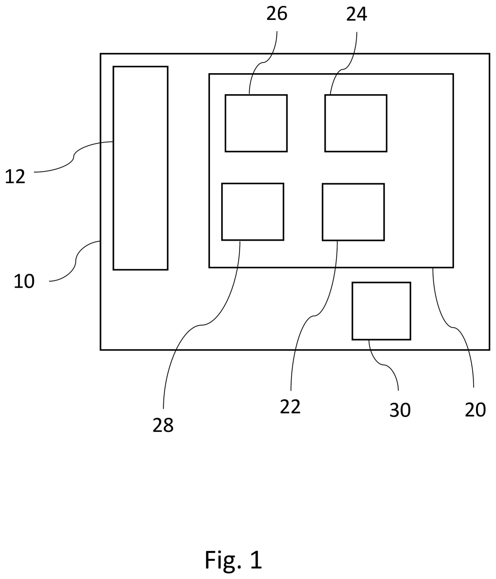

Figur 1 zeigt eine erfindungsgemäße Vorrichtung 10 mit einer Prozessoreinheit 20 und einem Speicher 12, in dem ein auszuführendes Programm gespeichert sein kann. In der hier gezeigten Ausführungsform umfasst die Prozessoreinheit 20 eine Auswahleinheit 22 zum Auswählen von mindestens zwei Teilbäumen eines Programms und eine Mergeeinheit 24, um die ausgewählten Teilbäume mit seinen Funktionsmodulen zu einer Hyperfunktion mit einer die Funktionsmodule verbindenden Funktionsstruktur zusammenzufügen.

Die Vorrichtung 10 umfasst weiter einen Modulgenerator 26 zum Bilden wenigstens eines Linkmoduls. Das Linkmodul hat wenigstens einen Eingang zum Verbinden mit einem Funktionsmodul und wenigstens zwei Ausgänge zum Verbinden mit je einem Funktionsmodul. Das Linkmodul ist dazu ausgebildet, den Eingang wahlweise mit einem der Ausgänge zu verknüpfen. Die Auswahl der Verknüpfung geschieht über Parameter, die an eine mittels der Vorrichtung 10 gebildete Hyperfunktion übergeben werden.

Eine Umwandlungseinheit 28 in der Vorrichtung 10 ist dazu ausgebildet, das wenigstens eine Linkmodul in die Funktionsstruktur der Hyperfunktion einzufügen und zwar derart, dass das Linkmodul in einem Teilbaum der Funktionsstruktur zwischen zwei Funktionsmodulen eingefügt wird. Das Einfügen erfolgt derart, dass ein semantisch falscher Strukturpfad gebildet wird und dass zwei Funktionsmodule miteinander verknüpft werden.

Durch eine geeignete Ansteuerung der Linkmodule kann der ursprüngliche Strukturpfad oder Funktionspfad der verknüpften Teilbäume (der Funktionen) wiederhergestellt werden. Es ist aber auch möglich, die Linkmodule derart zu verknüpfen, dass eine semantisch falsche Beziehung gebildet wird und Funktionsmodule funktional miteinander in Verbindung stehen, deren verknüpfte Abarbeitung und Ausführung programmtechnisch unsinnig ist und zu fehlerhaften, falschen oder irrelevanten Ergebnissen führt.

Die Vorrichtung 10 kann weiter eine Ausführungsumgebung 30 umfassen, in der entweder die mittels der Vorrichtung gebildete Funktionsstruktur abgelegt und gespeichert ist oder die dazu ausgebildet ist, eine Auswahlfunktion zur Erstellung der geeigneten Parameter zum Aufrufen der Hyperfunktion, die mit der Vorrichtung 10 gebildet wird, auszuführen. Die Ausführungsumgebung 30 kann eine sichere Umgebung sein, beispielsweise ein Vertrauensanker. Alternativ kann die Ausführungsumgebung 30 auch ein Secure-Element sein.

Darüber hinaus ist es möglich, dass die Ausführungsumgebung 30 in Form eines externen Secure-Elements realisiert ist, das mit der Vorrichtung 10 verbunden ist. Das Secure-Element oder die Ausführungsumgebung 30 können auch in einer Cloud realisiert sein, beispielsweise in einer externen Remote-Umgebung.

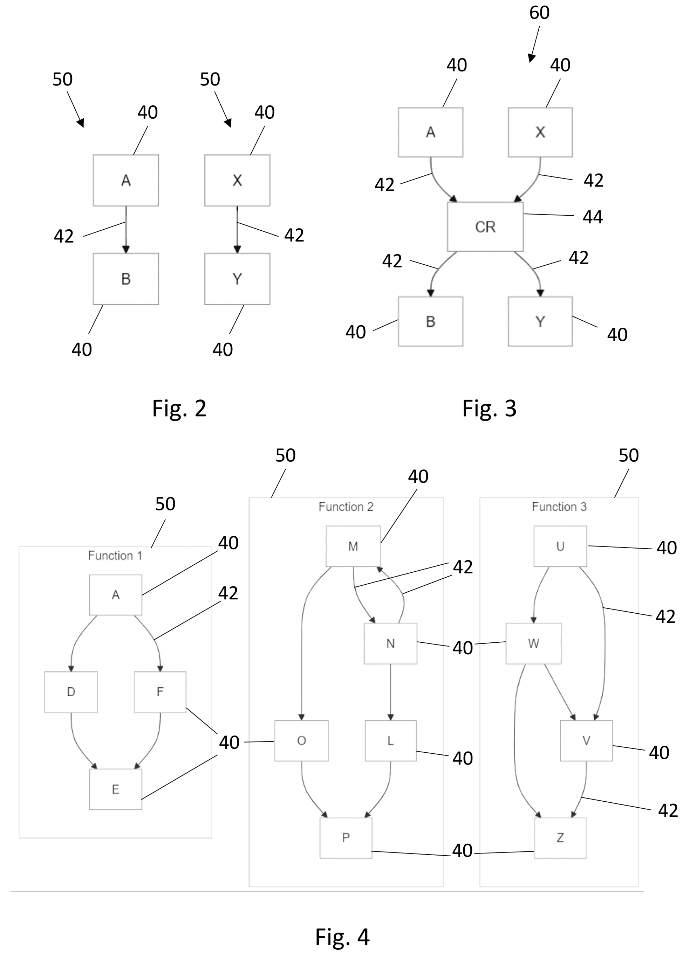

Fig. 2 zeigt eine einfache Darstellung zweier separater Funktionen 50 und deren Funktionspfade. Der erste Pfad umfasst zwei Funktionsmodule 40, A und B, und einen sie verknüpfenden Teilbaum 42. Der zweite Pfad hat zwei Funktionsmodule 40, X und Y, mit einem Teilbaum 42.

Voraussetzung zum Verschleiern ist folglich ein Linkmodul 44, das mindestens einen Eingang zum Verbinden mit einem Funktionsmodul 40 und mindestens zwei Ausgänge zum Verbinden mit je einem Funktionsmodul 40 aufweist. Das in Figur 3 gezeigte Linkmodul 44 hat zwei Eingänge und zwei Ausgänge.

In Fig. 3 ist gezeigt, dass die beiden Teilbäume 42 miteinander verwoben bzw. verknüpft werden. Ein Linkmodul 44, auch als Crossing (CR) bezeichnet, ist zwischen diese Teilbäume 42 eingefügt. Das Linkmodul 44 hat Verbindungen zu beiden Funktionen und ermöglicht potenzielle Pfadvariationen zwischen den oberen und unteren Funktionsmodulen 40. Damit werden auch semantisch falsche Strukturpfade möglich, die die Funktionsmodule A und Y bzw. X und B miteinander verknüpfen können, welche in den Original-Funktionen nicht vorgesehen sind.

Diese falschen Strukturpfade (A->Y; X->B) sind semantisch ungültig, aber für einen Angreifer nicht als solche bei statischen Analysen einer so gebildeten Hyperfunktion 60 erkennbar. Ein Angreifer bräuchte hier ein zusätzliches, tiefergreifendes Programmverständnis.

Da die Wahl des Ausgangs und somit der Pfad durch das Linkmodul 44 erst zur Laufzeit der Funktion bzw. des Programms ausgewählt wird, ist ein Nachvollziehen und Erkennen der tatsächlichen Funktionsstruktur sehr schwierig und erfordert einen sehr hohen und unattraktiven Reverse Engineering Aufwand. Die Wahl des Pfads wird mittels Parameter gesteuert, die an die Hyperfunktion 60 übergeben werden.

Durch das Verbinden eines Linkmoduls 44 mit zwei Funktionen 50 kann eine Hyperfunktion 60 gebildet werden, die die beiden ursprünglich getrennten Funktionen 50 in einer Funktion 50 vereint. Die einzelnen Funktionen sind in der Hyperfunktion nicht mehr erkennbar. Dieser Effekt ist umso gravierender, je mehr Funktionen gemergt und je mehr Linkmodule 44 in die Hyperfunktion integriert werden können. Ein Linkmodul 44 kann bevorzugt an einer beliebigen Stelle in der Funktionsstruktur eingesetzt werden.

Fig. 4 zeigt drei separate Funktionsdiagramme von Funktionen 50 (Function 1, Function 2, Function 3) mit unterschiedlichen Funktionsstrukturen und Kontrollflüssen. Durch das Einfügen von Linkmodulen 44 zwischen diesen Funktionen können scheinbare Verbindungen geschaffen werden, die den tatsächlichen Programmablauf und die wirkliche Funktionsstruktur verschleiern. Die einzelnen Funktionen 50 werden ausgewählt und in eine Hyperfunktion 60 überführt. Die Funktionen 50 können unterschiedlich sein und verschiedene Strukturen und Pfade aufweisen.

Die Steuerung der Linkmodule 44 erfolgt über zusätzliche Parameter als Eingabeparameter beim Aufruf der Hyperfunktion 60. Diese Parameter werden bei der Ausführung der Hyperfunktion 60 verwendet, um den korrekten Pfad durch die verschachtelte Funktionsstruktur der Hyperfunktion zu wählen. Von allen möglichen Pfaden durch die Funktionsstruktur ist nur eine Submenge semantisch sinnvoll.

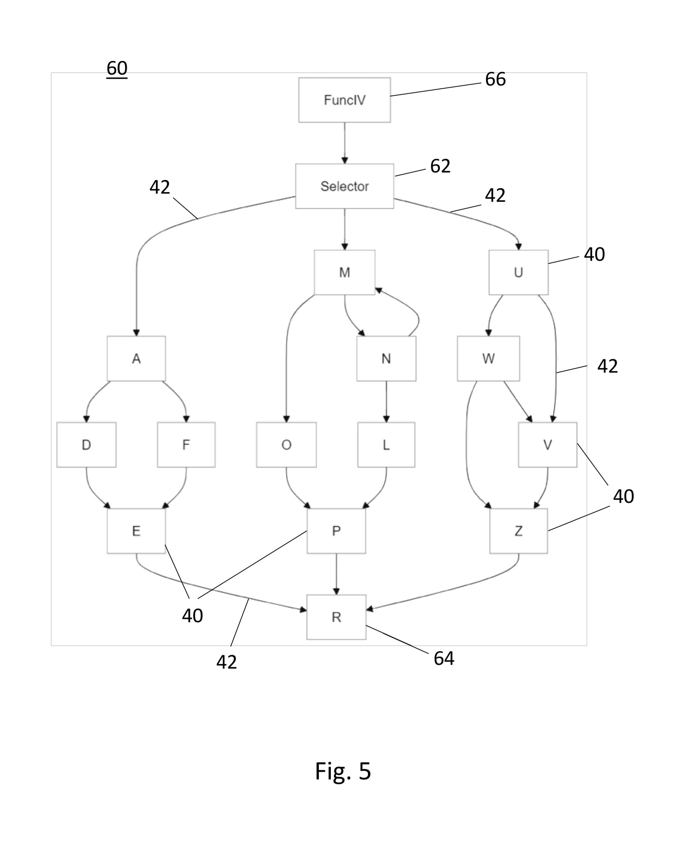

Figur 5 zeigt die drei zu einer Hyperfunktion 60 zusammengeführten Funktionen 50 aus Figur 4 mit einem Selektionsmodul 62, um die einzelnen Funktionen anzusprechen. Die entstandene Hyperfunktion 60 hat neben dem Selektionsmodul 62 ein zusätzliches Ausgangsmodul 64, um die Ergebnisse drei Funktionen zusammenzuführen und an das aufrufende Programm zurückzugeben.

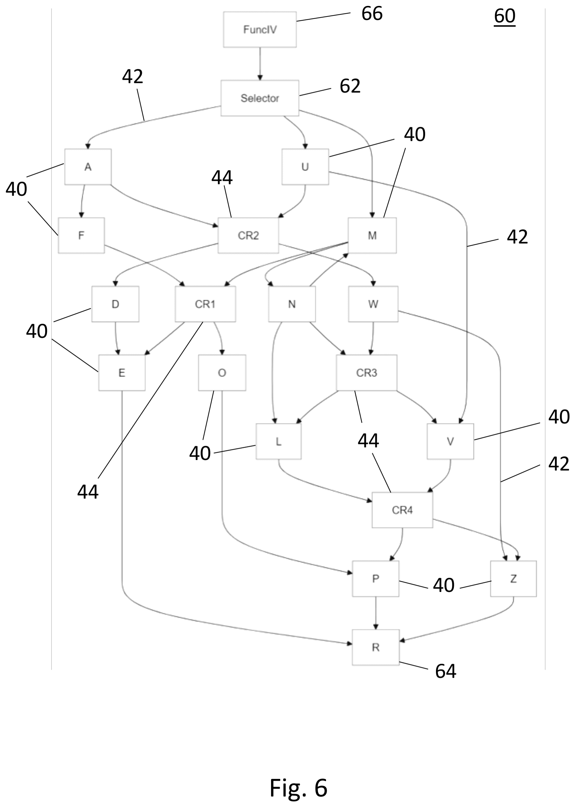

In einem weiteren Schritt werden mehrere Linkmodule 44 in die Teilbäume 42 der Funktionen 50 eingefügt und so neue Verknüpfungen generiert, von denen nur eine Teilmenge semantisch sinnvoll ist und der ursprünglichen Funktionalität der einzelnen Funktionen 50 entspricht. Das beispielhafte Ergebnis der Hyperfunktion 60 ist in Figur 6 dargestellt.

Ein wesentlicher Schritt im Obfuskationsprozess ist das Ersetzen des ursprünglichen Funktionsinhalts durch Stubs oder durch einen Funktionsrumpf. Diese Stubs rufen die Hyperfunktion 60 über ein Eingangsmodul 66 (FuncIV in Figur 5 und 6) mit dem entsprechenden Selektionsparameter und anderen Parametern auf. Dadurch wird die direkte Ausführung der ursprünglichen Funktionen 50 verhindert und der Kontrollfluss durch die komplexe Funktionsstruktur der Hyperfunktion 60 geleitet.

Die Datenflussrealisierung innerhalb der Hyperfunktion 60 erfolgt vorzugsweise unter Verwendung von φ-Knoten anstelle von reg2mem- und mem2reg-Operationen. Diese Methode ermöglicht eine präzisere Darstellung der Datenbeziehungen in der LLVM IR und verbessert die Optimierungsmöglichkeiten.

Zur weiteren Erhöhung der Komplexität können eine bevorzugt oder mehrere ungültige Funktionsmodule 40 in die Funktionsstruktur der Hyperfunktion 60 eingefügt werden. Diese Module dienen als zusätzliche Ablenkung für potenzielle Angreifer und erschweren die Analyse des tatsächlichen Programmablaufs. Bei der Ausführung der Hyperfunktion 60 (Figur 6) wird in dem Selektionsmodul 62 (Selector) die Auswahl einer der drei Funktionen 50 aus Figur 5 getroffen und in die entsprechenden Funktionsmodule 40, A, U, M verzweigt.

Gleichzeitig werden der Hyperfunktion 60 anhand der erhaltenen Parameter auch die Linkparameter mitgegeben, die die Ansteuerung der einzelnen Linkmodule 44 (CR1, CR2, CR3 und CR4) ermöglicht. Hierdurch wird der ursprünglich gewünschte Pfad durch die Funktionsstruktur der Hyperfunktion 60 ausgewählt und dynamisch verknüpft. Dies erfolgt in Abhängigkeit der übergebenen Parameter. Die Parameter können dynamisch und zur Laufzeit festgelegt werden, ebenso die Reihenfolge der Parameter, in der sie an die Hyperfunktion 60 übergeben werden. Eine bevorzugte statische Reihenfolge führt jedoch zu einer effizienteren Ausführung

Das Ergebnis der Hyperfunktion 60 wird mit dem Ausgangsmodul 64 (Funktionsmodul R) ausgegeben. Hier werden die drei Funktionen 50 aus Figur 4 zusammengeführt werden, in dem die jeweils letzten Funktionsmodule 40, E, P, Z mit dem Ausgangsmodul 64, R verknüpft sind.

Durch Einsatz der Linkmodule 44 werden Verknüpfungen zwischen den Funktionsmodulen 40 generiert bei denen die ursprünglichen Funktionen 50 miteinander verknüpft werden, was nicht vorgesehen ist. Es entstehen also semantisch falsche bzw. unsinnige Verknüpfungen, die jedoch nicht zu erkennen sind.

Figur 6 ist zu entnehmen, dass die ursprüngliche Struktur der drei Funktionen 50 aus Figur 4 nicht mehr nachvollziehbar ist, sodass für einen Angreifer mit einer statischen Analyse keine Möglichkeit besteht, den bisherigen Programmablauf nachzuvollziehen und selbst zu implementieren.

Die Idee der Erfindung ist, dass der tatsächliche Kontrollfluss und insbesondere enthaltene (Sub-) Funktionen eines Programms vor dem Angreifer verborgen werden, indem mehrere Funktionen zu einer Hyperfunktion 60 zusammengefasst werden, während die tatsächliche Funktionalität des Programms vollständig erhalten bleibt. Durch künstlich eingefügte Verknüpfungsblöcke in Form von Linkmodulen 44 werden die Verbindungen zwischen eigentlich nicht zusammengehörenden Funktionen 50 in der Funktionsstruktur der Hyperfunktion 60 hergestellt, um die Analysekomplexität für den Angreifer zu erhöhen. Dabei könnten beispielsweise Funktionen mit einander verlinkt werden, die thematisch oder in Bezug auf den Ablauf oder auf das zu erzielende Ergebnis der Verarbeitung nicht zusammengehören oder zusammenpassen oder gemeinsame Berührungspunkte insoweit aufweisen, dass sie gleiche oder ähnliche Daten, Werte, Variablen oder Informationen betreffen.

Durch eine spezielle Auswahl und Ansteuerung mit Hilfe von Linkparametern werden dann die korrekten Pfade der Hyperfunktion angesteuert, um die ursprüngliche Funktionalität zu erhalten. Diese Auswahl kann bevorzugt von dem Selektionsmodul basierend auf den Eingabeparametern für die Hyperfunktion ausgeführt oder initiiert werden.

Die so gebildete Hyperfunktion, die einer übergeordneten Funktion entspricht, nimmt dabei wenigstens alle Parameter entgegen, die von allen Funktionen 50 (Teilfunktionen) verwendet werden. Die Menge der hier benutzten Parameter ist somit größer als die maximal mögliche Menge aller Parameter, die von den einzelnen Funktionen verwendet werden bzw. verwendet werden können. Zusätzlich ist wenigstens ein Selektionsparameter als Identifier vorgesehen, der für die Selektion dient.

Vorteil dieses Verfahrens ist die Erhöhung der Programmkomplexität ohne nennenswerte Performance-Einbußen. Dieses Verfahren kann bevorzugt mit anderen Verfahren, wie beispielsweise einer "Create Control Flow Variant"-Funktion oder einem "Localize Scope" kombiniert werden.

Durch die Erhöhung der Komplexität des Kontrollflusses und der -graphen wird deren Analyse sehr stark erschwert. Das SAT-Problem kann als ein NP-Problem angesehen werden, wobei offen ist, schwere Probleminstanzen zu finden.

Das Verschleiern der Zusammenhänge zwischen den Funktionen, gerade wenn die Auswahlfunktion zum Festlegen und Übergeben der Parameter für die Hyperfunktion über einem Vertrauensanker (sichere Ausführungsumgebung, Secure-Element) stattfindet, macht Prädikate der Funktionen schwerer zu rekonstruieren und zu analysieren. Die beschriebene Technik kann mit Kontrollfluss-Indirektionen kombiniert werden, um die Analyse weiter zu erschweren. In Verbindung mit einer Auslagerung der Auswahlfunktion in einen sicheren Vertrauensanker, beispielsweise mittels "CodeMoving", kann die Sicherheit weiter erhöht werden.

Im Sinne der Erfindung ist Funktionsmodul ein Programmcode mit wenigstens einer Teilfunktion, der eine semantische Zugehörigkeit aufweist. Ein Funktionsmodul kann eine oder mehrere Zeilen Programmcode umfassen, der eine Funktion des Programms umfasst oder in dem eine Funktion des Programms implementiert ist. Ein Funktionsmodul, auch als "Block" oder "BasicBlock" bezeichnet, ist also eine grundlegende Einheit des Programmcodes, die eine spezifische Aufgabe oder Berechnung ausführt. Es besteht typischerweise aus einer Sequenz von Anweisungen, die ohne Verzweigungen oder Sprünge ausgeführt werden. Funktionsmodule bilden die Bausteine einer Funktion und können durch Kontrollflussstrukturen miteinander verbunden sein.

Verwendete Begriffe:
Eine Funktion des Programms ist ein abgegrenzter Codeabschnitt innerhalb eines Programms, der eine bestimmte Aufgabe erfüllt. Sie besteht aus einem oder mehreren Funktionsmodulen und kann Eingabeparameter empfangen, Berechnungen durchführen und Ergebnisse zurückgeben. Funktionen dienen der Strukturierung und Modularisierung von Programmen und können von anderen Teilen des Programms aufgerufen werden.

Crossing (Linkmodul): Ein Crossing, auch als "Linkmodul" oder "CR" bezeichnet, ist eine in der vorliegenden Erfindung eingeführte Struktur, die zwischen Funktionsmodule eingefügt wird. Es verfügt über mindestens einen Eingang und mindestens zwei Ausgänge und ermöglicht die Bildung alternativer Pfade zwischen Funktionsmodulen. Linkmodule dienen dazu, den Kontrollfluss zu verschleiern und die Komplexität des Programms zu erhöhen, ohne dessen ursprüngliche Funktionalität zu beeinträchtigen.

Hyperfunktion: Eine Hyperfunktion, auch als "riesige Funktion" bezeichnet, ist das Ergebnis der Verschmelzung mehrerer ursprünglich separater Funktionen. Sie enthält die Funktionsmodule aller zusammengefassten Funktionen sowie zusätzliche Strukturen wie Linkmodule und einen Selektor. Die Hyperfunktion dient als Container für den obfuskierten Code und ermöglicht eine komplexe, schwer zu analysierende Programmstruktur bei Beibehaltung der ursprünglichen Funktionalität.

Teilbaum: Ein Teilbaum ist eine Unterstruktur innerhalb der Funktionsstruktur oder des Kontrollflussgraphen eines Programms. Er besteht aus einer Gruppe von Funktionsmodulen und deren Verbindungen, die eine zusammenhängende Einheit bilden. Teilbäume können einzelne Funktionen oder Teile von Funktionen repräsentieren und sind wichtige Elemente bei der Analyse und Umstrukturierung des Programmcodes im Rahmen der Obfuskation.

Pfad: Ein Pfad bezeichnet eine Sequenz von Funktionsmodulen und Verbindungen, die während der Ausführung des Programms durchlaufen werden können. Er stellt eine mögliche Abfolge von Anweisungen dar, die das Programm von einem Startpunkt zu einem Endpunkt nehmen kann. Im Kontext der Obfuskation können Pfade sowohl valide Ausführungssequenzen als auch künstlich erzeugte Routen durch den Code repräsentieren.

Strukturpfad: Ein Strukturpfad ist ein spezifischer Pfad durch die Funktionsstruktur der Hyperfunktion, der durch die Anordnung von Funktionsmodulen und Linkmodulen definiert wird. Er kann sowohl semantisch korrekte als auch semantisch falsche Verbindungen zwischen Funktionsmodulen umfassen. Im Kontext der Erfindung dienen Strukturpfade dazu, die Komplexität des Codes zu erhöhen und die Analyse des tatsächlichen Programmablaufs zu erschweren. Ein semantisch falscher Strukturpfad verbindet Funktionsmodule auf eine Weise, die nicht der ursprünglichen Programmlogik entspricht, aber für einen Angreifer nicht leicht als ungültig zu erkennen ist.

Merkmale der oben beschriebenen Beispiele oder Ausführungsformen können kombiniert werden, um zusätzliche Beispiele oder Ausführungsformen zu erstellen, ohne die beabsichtigte Wirkung zu verlieren. Es sollte verstanden werden, dass die oben bereitgestellte Beschreibung einer Ausführungsform oder eines Beispiels nur beispielhaft ist und verschiedene Modifikationen von einem Fachmann vorgenommen werden könnten. Darüber hinaus wird ein Fachmann erkennen, dass zahlreiche weitere Modifikationen und Kombinationen verschiedener Aspekte möglich sind. Dementsprechend sollen die beschriebenen Aspekte alle solche Änderungen, Modifikationen und Variationen umfassen, die in den Rahmen der beigefügten Ansprüche fallen. Die Bezugszeichen sind nicht einschränkend zu verstehen.

### Glossar

LLVM (früher Low Level Virtual Machine): Modulares Compiler-System mit einem virtuellen Befehlssatz.

LLVM IR (LLVM intermediate representation): Assembler-ähnliche architekturunabhängige Zwischensprache des LLVM compiler frameworks, aus welcher Programme in Maschinencode übersetzt werden können.

NP-Problem: Problem in der Komplexitätsklasse NP (Non-deterministic Polynomial Time). Probleme in dieser Komplexitätsklasse werden (im worst case) als nicht effizient lösbar angesehen (es kann zu NP-Problemen effizient lösbare Probleminstanzen geben; die Komplexitätsklasse richtet sich nach der am schwersten zu lösenden Probleminstanz, also dem worst case).

Opake Prädikate: Boolsche Ausdrücke, die für alle Variablenbelegungen den gleichen Wahrheitswert annehmen. Wird in der Obfuskation benutzt, um den Angreifer mit totem Code (d.h. Code, der niemals ausgeführt wird) zu verwirren: Das Opake Prädikat wird als Bedingung einer IF-Anweisung verwendet, die somit immer in demselben Pfad mündet (immer "then" oder immer "else"). Code im anderen Pfad wird nie ausgeführt und ist damit für die Analyse des Angreifers eigentlich uninteressant, was der Angreifer aber erstmal herausfinden muss. Die Identifikation opaker Prädikate und damit von totem Code als solchen ist eine Instanziierung des SAT-Problems.

SAT-Problem (Erfüllbarkeitsproblem): Das Problem, ob ein boolscher Ausdruck erfüllbar ist, also ob es eine Variablenbelegung gibt, sodass der boolsche Ausdruck den Wahrheitswert "True" ("Wahr") annimmt. Das SAT-Problem ist NP-Vollständig, allerdings ist derzeit kein effizientes Verfahren zum Finden schwerer Probleminstanzen bekannt. Im Durchschnittsfall sind SAT-Instanzen effizient durch SAT-Solver oder SMT-Solver lösbar. Wird in der Obfuskation eingesetzt in Form von Opaken Prädikaten.

SSA-Form (single-static assignment form): Repräsentation des Programmflusses, in dem jede Variable nur einmal zugewiesen wird. Jede Änderung einer Variable resultiert in einer neuen Variablen. Bei Verwendung einer Variablen, die abhängig vom Kontrollfluss ist, wird diese mittels einer sogenannten φ-Funktion ausgewählt.

φ-Funktion: Spezielle Funktion aus der SSA-Theorie zur Auswahl der zu benutzenden Variablen.

φ-Node: Instruktion, welche die φ-Funktion in LLVM IR umsetzt.

### Bezugszeichenliste

- 10: Vorrichtung
- 12: Speicher
- 20: Prozessoreinheit
- 22: Auswahleinheit
- 24: Mergeeinheit
- 26: Modulgenerator
- 28: Umwandlungseinheit
- 30: Ausführungsumgebung
- 40: Funktionsmodul
- 42: Teilbaum
- 44: Linkmodul
- 50: Funktion
- 60: Hyperfunktion
- 62: Selektionsmodul
- 64: Ausgangsmodul
- 66: Eingangsmodul

## Patentansprüche

1. Verfahren zum Schutz vor nicht autorisierter gezielter Beeinflussung eines Programms mit Maßnahmen zum Unterbinden eines Auslesens von Instruktionen und Kontrollflussinformationen des geschützten Programms, wobei das Programm eine Funktion (50) mit wenigstens zwei Funktionsmodulen (40) hat, wobei wenigstens zwei Teilbäume (42) zwischen Funktionsmodulen (40) ausgebildet sind, umfassend:
Auswählen von wenigstens zwei Teilbäumen (42) des Programms;
Zusammenfügen der ausgewählten Teilbäumen (42) mit den Funktionsmodulen (40) zu einer Hyperfunktion (60) mit einer die Funktionsmodule (40) verbindenden Funktionsstruktur;
Bilden wenigstens eines Linkmoduls (44) mit wenigstens einem Eingang zum Verbinden mit einem Funktionsmodul (40) und wenigstens zwei Ausgängen zum Verbinden mit je einem Funktionsmodul (40), das dazu ausgebildet ist, den Eingang wahlweise mit einem der Ausgänge zu verknüpfen;
Einfügen von dem wenigstens einen Linkmodul (44) in die Funktionsstruktur derart, dass das Linkmodul (44) in einen Teilbaum (42) der Funktionsstruktur zwischen zwei Funktionsmodulen (40) eingefügt wird;
Bilden eines semantisch falschen Strukturpfads mit dem Linkmodul (44) zwischen zwei Funktionsmodulen (40) derart, dass zwei Funktionsmodule (40) funktional miteinander verknüpft werden.

2. Verfahren nach Anspruch 1, **gekennzeichnet durch** die weiteren Schritte:
Einfügen eines Selektionsmoduls (62) zum Verknüpfen und zum Auswählen der Funktionen (50) und/oder Funktionsmodule (40) und bevorzugt zum Ansteuern der Linkmodule (44); und
Einfügen eines Ausgangsmoduls (64) zum Zusammenführen von Ergebnissen der Funktionen (50) und zum Ausgeben wenigstens eines Ergebnisses an das Programm.

3. Verfahren nach Anspruch 1 oder 2, **gekennzeichnet durch** den weiteren Schritt:
Einfügen eines oder mehrerer ungültiger Funktionsmodule (40) in die Funktionsstruktur der Hyperfunktion (60).

4. Verfahren nach einem der vorhergehenden Ansprüche, **dadurch gekennzeichnet, dass** die Funktionsmodule (40) zu unterschiedlichen Funktionen (50) gehören.

5. Verfahren nach einem der vorhergehenden Ansprüche, **gekennzeichnet durch** die weiteren Schritte:
Aufrufen der Hyperfunktion (60);
Übergeben von Eingabeparametern von dem Programm an die Hyperfunktion (60), wobei die Eingabeparameter Parameter zum Aufruf der Funktionen (50) und wenigstens einen Linkparameter zur Ansteuerung des wenigstens einen Linkmoduls (44) umfassen;
Empfangen eines Ergebnisses der Hyperfunktion (44).

6. Verfahren nach dem vorhergehenden Anspruch, **gekennzeichnet durch** den weiteren Schritt:
Übergeben eines Selektionsparameters an die Hyperfunktion (60) zur Auswahl einer der Funktionen (50) der Hyperfunktion (60);
Wobei der Selektionsparameter bevorzugt eine globale Variable oder eine lokale Variable einer Funktion (50) ist oder bevorzugt auf einer lokalen Analyse von Zuständen des Programms basiert.

7. Verfahren nach einem der vorhergehenden Ansprüche, **dadurch gekennzeichnet, dass** die Eingabeparameter Informationen zur Festlegung eines Strukturpfads durch die Funktionsstruktur umfassen.

8. Verfahren nach einem der vorhergehenden Ansprüche, **gekennzeichnet durch** die weiteren Schritte:
Empfangen eines Kontrollparameters und/oder des wenigstens einen Linkparameters, wobei die Parameter bevorzugt in das Ergebnis der Hyperfunktion (60) integriert sind;
Optionales Bewerten des Ergebnisses basierend auf dem Linkparameter oder eines Bewertungsparameter, der Informationen zum Strukturpfad umfasst.

9. Verfahren nach einem der vorhergehenden Ansprüche, **dadurch gekennzeichnet, dass** ein Parametersatz als Eingabeparameter zum Aufruf der Hyperfunktion (60) verwendet wird, der alle Parameter der Funktionen (50) der Hyperfunktion (60) umfasst.

10. Verfahren nach einem der vorhergehenden Ansprüche, **gekennzeichnet durch** die weiteren Schritte:
Auswerten eines Programmcodes der Hyperfunktion (60), um eine Metrik für den Grad einer Obfuskation der Hyperfunktion (60) zu erhalten;
Anwenden und Implementieren weiterer Obfuskationsmethoden auf den Programmcode der Hyperfunktion (60), wenn die Metrik unter einem vordefinierten Schwellwert liegt.

11. Funktionsstruktur einer Hyperfunktion (60) eines Programms, wobei die Hyperfunktion (60) umfasst:
Wenigstens drei Funktionsmodule (40);
wenigstens eine Funktion (50) mit zwei Funktionsmodulen (40);
wenigstens zwei Teilbäume (42) zwischen Funktionsmodulen (40);
ein Linkmodul (44) mit wenigstens einem Eingang zum Verbinden mit einem Funktionsmodul (40) und wenigstens zwei Ausgängen zum Verbinden mit je einem Funktionsmodul (40), wobei das Linkmodul (42) dazu ausgebildet ist, den Eingang wahlweise mit einem der Ausgänge zu verknüpfen;
wobei in der Funktionsstruktur die Funktionsmodule (40) und das Linkmodul (44) derart angeordnet sind, dass
das Linkmodul (44) in einen Teilbaum (42) der Funktionsstruktur zwischen zwei Funktionsmodulen (40) angeordnet ist und
ein semantisch falscher Strukturpfad mit dem Linkmodul (44) zwischen zwei Funktionsmodulen (40), die funktional miteinander verknüpft sind, gebildet ist.

12. Funktionsstruktur nach dem vorhergehenden Anspruch, **dadurch gekennzeichnet, dass** die Funktionsstruktur in einer Ausführungsumgebung (30) implementiert oder ausgeführt wird, wobei die Ausführungsumgebung (30) bevorzugt eine sichere Umgebung ist, bevorzugt in einem Vertrauensanker, einem Secure-Element oder in einem Speicher mit Prozessor, wobei weiter bevorzugt die Ausführungsumgebung (30) in der Cloud oder im Internet oder einem Remote-Speicher oder Netzwerkspeicher implementiert ist.

13. Vorrichtung zum Erstellen eines obfuskierten Programmcodes einer Funktion (50) eines Programms zum Schutz vor nicht autorisierter Beeinflussung des Programms zur Laufzeit, wobei die Funktion (50) wenigstens zwei Funktionsmodule (40) hat, wobei wenigstens zwei Teilbäume zwischen Funktionsmodulen ausgebildet sind, umfassend:
eine Auswahleinheit (22) zum Auswählen von wenigstens zwei Teilbäumen (42) des Programms;
eine Mergeeinheit (24) zum Zusammenfügen der ausgewählten Teilbäumen (42) mit den Funktionsmodulen (40) zu einer Hyperfunktion (60) mit einer die Funktionsmodule (40) verbindenden Funktionsstruktur;
einen Modulgenerator (26) zum Bilden wenigstens eines Linkmoduls (44) mit wenigstens einem Eingang zum Verbinden mit einem Funktionsmodul (40) und wenigstens zwei Ausgängen zum Verbinden mit je einem Funktionsmodul (40), das dazu ausgebildet ist, den Eingang wahlweise mit einem der Ausgänge zu verknüpfen;
eine Umwandlungseinheit (28) zum Einfügen von dem wenigstens einen Linkmodul (44) in die Funktionsstruktur derart, dass das Linkmodul (44) in einen Teilbaum (42) der Funktionsstruktur zwischen zwei Funktionsmodulen (40) eingefügt und ein semantisch falscher Strukturpfad mit dem Linkmodul (44) zwischen zwei Funktionsmodulen (40) derart gebildet wird, dass zwei Funktionsmodule (40) funktional miteinander verknüpft werden;

14. Vorrichtung nach dem vorhergehenden Anspruch, **dadurch gekennzeichnet, dass** die Vorrichtung dazu ausgebildet ist, das Verfahren nach einem der Ansprüche 1 bis 10 auszuführen.

15. Vorrichtung nach Anspruch 13 oder 14, **dadurch gekennzeichnet, dass** die Vorrichtung eine Ausführungsumgebung umfasst oder mit einer Ausführungsumgebung (30) verbunden ist, in der die Funktionsstruktur oder eine Auswahlfunktion zur Festlegung der Parameter der Hyperfunktion (60) implementiert ist oder ausführbar ist, wobei die Ausführungsumgebung (30) bevorzugt eine sichere Umgebung ist, bevorzugt in einem Vertrauensanker, einem Secure-Element oder in einem Speicher mit Prozessor, wobei weiter bevorzugt die Ausführungsumgebung (30) in der Cloud oder im Internet oder einem Remote-Speicher oder Netzwerkspeicher implementiert ist.
